# EUROPEAN PATENT APPLICATION

(11) **EP 4 503 836 A1**
(43) Date of publication of application: **05.02.2025**
(21) Application number: 23777908.7
(22) Date of filing: 20.03.2023
(51) Int. Cl.: H04W 76/10

(54) **NETWORK INFORMATION OPENING METHOD AND APPARATUS, RELATED DEVICE AND STORAGE MEDIUM**

(30) Priority: 29.03.2022 CN 202210323864; 10.08.2022 CN 202210956211
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: ZHENG, Shaowen, Beijing 100032 (CN); WANG, Dan, Beijing 100032 (CN); SUN, Tao, Beijing 100032 (CN)
(74) Representative: Maiwald GmbH
(86) International application number: PCT/CN2023/082614
(87) International publication number: WO 2023/185535

(57) **Abstract**

The present disclosure provides a network information opening method and apparatus, a first function, a second function and a storage medium. The method comprises: the first function receiving first information, determining network information on the basis of the first information, and opening the network information, wherein the first information comprises related information of the second function, and the second function comprises an application function (AF) or an edge application server (EAS).

## Description

### CROSS-REFERENCE TO RELATED APPLICATIONS

This application is a U.S. national phase of International Application No. PCT/CN2023/082614, which claims the benefit of priority to Chinese Patent Application No. 202210323864.1, filed on March 29, 2022, and priority to Chinese Patent Application No. 202210956211.7, filed on August 10, 2022, the contents of which are incorporated herein by reference in their entire ties for all purposes.

### TECHNICAL FIELD

The present disclosure relates to the field of wireless communications and, in particular to a method and an apparatus for exposing network information, an associated device, and a storage medium.

### BACKGROUND

Network information may be used to guide construction of an optimized end-to-end network for a shorter transmission path and more convenient management. However, since the network may belong to different operators/vendors/providers, the communication network is often viewed as a black box for the application party, which is not conducive to constructing an optimal end-to-end network to meet requirements of users. For example, in a case that an application function (AF) reports a data network access identifier (DNAI) automatically, since the AF usually is not aware of the network information, it is difficult to perform the optimal DNAI configuration.

A network that is optimal from the perspective of the communication network to application service is required to be constructed to provide a better user experience to the user of a mobile communication network. A certain degree of network information exposure is required to assist the application service in performing a network configuration based on the network information to construct the optimal end-to-end network.

In the related art, there is no effective solution to expose the network information according to the requirements.

### SUMMARY

To solve a related technical problem, a method and an apparatus for exposing network information, an associated device, and a storage medium are provided in embodiments of the present disclosure.

The technical solutions of the embodiments of the present disclosure are implemented as follows.

A method for exposing network information, applied to a first function, is provided in an embodiment of the present disclosure. The method includes: receiving first information, and determining network information based on the first information, in which the first information includes relevant information of a second function, in which the second function includes an application function (AF) or an edge application server (EAS); and exposing the network information.

In the above technical solution, the relevant information of the second function includes at least one of: address information; location information; application information; corresponding user information; or network related information.

In the above technical solution, the network related information includes at least one of: a data network name (DNN); or single-network slice selection assistance information (S-NSSAI).

In the above technical solution, the application information of the second function includes at least one of: provider/owner information of the second function; an application category carried in the second function; or an application identifier.

In the above technical solution, the address information of the second function includes at least one of: internet protocol (IP) address information; an IP address segment; IP domain information; or fully-qualified domain name (FQDN) information.

In the above technical solution, the network information includes at least one of: a data network access identifier (DNAI); an identifier corresponding to the DNAI; an external identifier corresponding to the DNAI; a user plane function (UPF) address; an identifier of the UPF; an IP domain; network configuration information corresponding to a user; a correspondence between public network IP address information and private network IP address information; or a private network IP address.

In the above technical solution, the method further includes: receiving a subscription to cause the second function to obtain updated network information.

In the above technical solution, determining the network information based on the first information includes: determining the network information based on the first information and network topology information.

In the above technical solution, the first function includes a network exposure function (NEF) and/or a policy control function (PCF), and the method further includes: obtaining the network topology information.

In the above technical solution, obtaining the network topology information includes: sending second information to a session management function (SMF), in which the second information is configured for requesting the network topology information, and the second information includes at least one of: address information of the second function; location information of the second function; application information of the second function; corresponding user information of the second function; or network related information of the second function; and receiving the network topology information sent from the SMF.

In the above technical solution, obtaining the network topology information includes: configuring the network topology information to the NEF/a unified data repository (UDR) by an operation administration and maintenance (OAM), in which the network topology information indicates mapping information between an EAS IP address/an IP address range and a DNAI. The network topology information includes at least one of: the DNAI; an identifier corresponding to the DNAI; an external identifier corresponding to the DNAI; a UPF address; an identifier of the UPF; an IP domain; network configuration information corresponding to a user; a correspondence between public network IP address information and private network IP address information; or a private network IP address.

In the above technical solution, obtaining the network topology information includes: sending sixth information to an SMF, in which the sixth information is configured for subscribing to the network topology information, in which the sixth information includes at least one of: address information of the second function; location information of the second function; application information of the second function; corresponding user information of the second function; or network related information of the second function; and receiving the network topology information sent from the SMF.

In the above technical solution, obtaining the network topology information includes: sending fourth information to a UDR, in which the fourth information is configured for requesting or subscribing to the network topology information, in which the fourth information includes at least one of: address information of the second function; location information of the second function; application information of the second function; corresponding user information of the second function; or network related information of the second function; and receiving the network topology information sent from the UDR.

In the above technical solution, obtaining the network topology information includes: sending sixth information to an OAM, in which the sixth information is configured for subscribing to the network topology information; receiving the network topology information sent from the OAM.

In the above technical solution, receiving the first information includes: receiving the first information sent from the second function, in which the first information is configured for requesting to expose network information related to the second function.

In the above technical solution, the method further includes: receiving third information sent from the second function, in which the third information is configured for requesting to update or delete the network information; sending the third information to a UDR; receiving a response returned from the UDR; and returning the response to the second function.

In the above technical solution, the method further includes: receiving fifth information sent from the second function, in which the fifth information is configured for requesting to retrieve or query the network information; sending the fifth information to a UDR; receiving a response returned from the UDR; and returning the response to the second function.

In the above technical solution, the first function includes an SMF, and receiving the first information includes: receiving the first information sent from an NEF and/or a PCF.

In the above technical solution, the network topology information includes at least one of: a DNAI; an identifier corresponding to the DNAI; an external identifier corresponding to the DNAI; a UPF address; an identifier of the UPF; an IP domain; network configuration information corresponding to a user; a correspondence between public network IP address information and private network IP address information; or a private network IP address.

In the above technical solution, the method further includes: storing the network information to a UDR; and/or, storing a correspondence between the relevant information of the second function and the network information to a UDR.

A method for exposing network information, applied to a second function, is also provided in an embodiment of the present disclosure. The method includes: sending first information to a network exposure function (NEF), in which the first information includes relevant information of the second function, in which the second function includes an application function (AF) or an edge application server (EAS); and in which the first information is configured for requesting to expose network information related to the second function; and receiving network information sent from the NEF.

In the above technical solution, the relevant information of the second function includes at least one of: address information; location information; application information; corresponding user information; or network related information.

In the above technical solution, the network related information includes at least one of: a data network name (DNN); or single-network slice selection assistance information (S-NSSAI).

In the above technical solution, the application information of the second function includes at least one of: provider/owner information of the second function; an application category carried in the second function; or an application identifier.

In the above technical solution, the address information of the second function includes at least one of: internet protocol (IP) address information; an IP address segment; IP domain information; or fully-qualified domain name (FQDN) information.

In the above technical solution, the network information includes at least one of: a data network access identifier (DNAI); an identifier corresponding to the DNAI; an external identifier corresponding to the DNAI; a user plane function (UPF) address; an identifier of the UPF; an IP domain; network configuration information corresponding to a user; a correspondence between public network IP address information and private network IP address information; or a private network IP address.

In the above technical solution, the method further includes: sending a subscription to an NEF to obtain updated network information.

In the above technical solution, the method further includes: sending third information to an NEF, in which the third information is configured for requesting to update or delete the network information; and receiving a response returned from the NEF.

In the above technical solution, the method further includes: sending fifth information to an NEF, in which the fifth information is configured for requesting to retrieve or query the network information; and receiving a response returned from the NEF.

An apparatus for exposing network information, configured in a first function, is provided in an embodiment of the present disclosure. The apparatus includes: a first processing unit, configured to receive first information, and determine network information based on the first information, in which the first information includes relevant information of a second function, in which the second function includes an application function (AF) or an edge application server (EAS); and a second processing unit, configured to expose the network information.

An apparatus for exposing network information, configured in a second function, is provided in an embodiment of the present disclosure. The apparatus includes: a sending unit, configured to send first information to a network exposure function (NEF), in which the first information includes relevant information of the second function, in which the second function includes an application function (AF) or an edge application server (EAS); and in which the first information is configured for requesting to expose network information related to the second function; and a receiving unit, configured to receive network information sent from the NEF.

A first function is provided in an embodiment of the present disclosure. The first function includes: a first communication interface and a first processor; in which the first processor is configured to receive first information through the first communication interface, and determine network information based on the first information, in which the first information includes relevant information of a second function, in which the second function includes an application function (AF) or an edge application server (EAS); and expose the network information through the first communication interface.

A second function is provided in an embodiment of the present disclosure. The second function includes: a second communication interface and a second processor; in which the second communication interface is configured to send first information to a network exposure function (NEF), in which the first information includes relevant information of the second function, in which the second function includes an application function (AF) or an edge application server (EAS); and in which the first information is configured for requesting to expose network information related to the second function; and receive network information sent from the NEF.

A first function is provided in an embodiment of the present disclosure. The first function includes: a first processor and a first memory that is configured to store a computer program executable by the processor, in which when the first processor is configured to execute the computer program, the steps of any of the method on the first function side are implemented.

A second function is provided in an embodiment of the present disclosure. The second function includes: a second processor and a second memory that is configured to store a computer program executable by the processor, in which when the second processor is configured to execute the computer program, the steps of any of the method on the second function side are implemented.

A storage medium is provided in an embodiment of the present disclosure. The storage medium has a computer program stored therein. When the computer program is executed by a processor, the steps of any of the method on the first function side, or the steps of any of the method on the second function side are implemented.

A method and an apparatus for exposing network information, an associated device, and a storage medium are provided in the embodiments of the present disclosure. The first function receives the first information, determines the network information based on the first information, and exposes the network information. The first information includes the relevant information of the second function, in which the second function includes an application function (AF) or an edge application server (EAS). In the technical solution provided in the embodiments of the present disclosure, since the exposed network information is determined based on relevant information of the AF or the EAS, network information that is required by the AF or the EAS and that may be exposed by a network operator/vendor/provider to the AF or the EAS may be determined based on the relevant information of the AF or the EAS. In this way, the AF or the EAS is assisted in performing a network configuration based on the network information to construct an optimal end-to-end network, further leakage of network information that cannot be exposed by the network operator/vendor/provider may be avoided.

### BRIEF DESCRIPTION OF THE DRAWINGS

FIG. 1 is a schematic diagram illustrating an edge computation deployment of a non-dedicated data network (Non-dedicated DN) in the related art.
FIG. 2 is a flowchart illustrating a method for exposing network information according to an embodiment of the present disclosure.
FIG. 3 is a flowchart illustrating another method for exposing network information according to an embodiment of the present disclosure.
FIG. 4 is a schematic diagram illustrating a DNAI mapping scheme according to an embodiment of the present disclosure.
FIG. 5 is a schematic diagram illustrating another DNAI mapping scheme according to an embodiment of the present disclosure.
FIG. 6 is a flowchart illustrating a process for deleting/updating DNAI mapping according to an embodiment of the present disclosure.
FIG. 7 is a block diagram illustrating an apparatus for exposing network information according to an embodiment of the present disclosure.
FIG. 8 is a block diagram illustrating another apparatus for exposing network information according to an embodiment of the present disclosure.
FIG. 9 is a block diagram illustrating a first function according to an embodiment of the present disclosure.
FIG. 10 is a block diagram illustrating a second function according to an embodiment of the present disclosure.
FIG. 11 is a block diagram illustrating a system for exposing network information according to an embodiment of the present disclosure.

### DETAILED DESCRIPTION

The present disclosure is described in further detail below in connection with the accompanying drawings and embodiments.

Firstly, a problem in the related art due to the lack of support for exposing network information as required is described in connection with an example application scenario in which an application function (AF) reports a data network access identifier (DNAI) automatically.

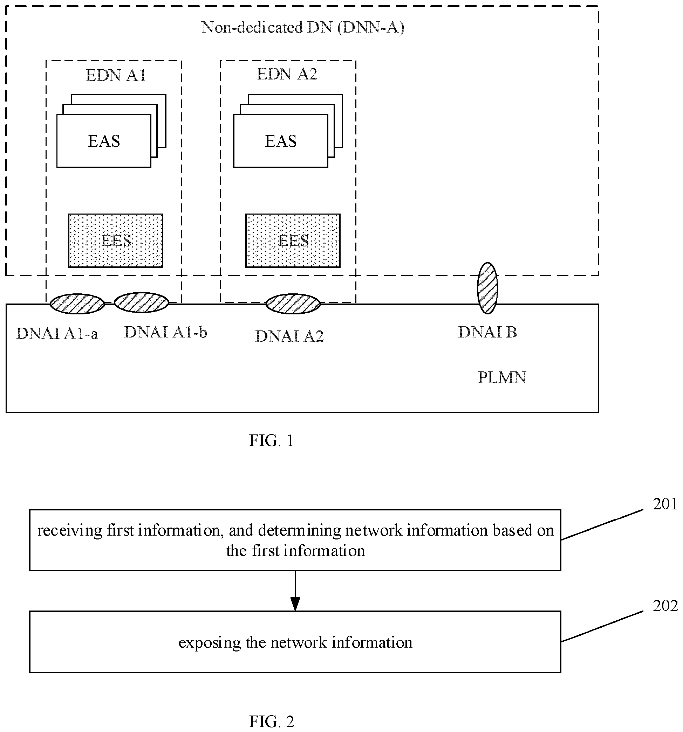

In particular, in a case of deploying edge computation for the 5th generation mobile communication technology (5G) system, an optimal transmission path is established when designing an optimal deployment scheme for an edge solution, to satisfy a service quality requirement for a strict edge service. In addition, a change in an application server (AS) also needs to be considered. For example, as shown in FIG. 1, under a data network name (DNN), it is required to consider how to determine an optimal mapping relationship between a DNAI and an edge application server (EAS) to ensure an optimal transmission path. For example, in a case where a serving EAS becomes congested or is in a disable state, another EAS needs to be made available to replace the serving EAS to serve a terminal (which may also be referred to as user equipment (UE), or also as user). It is required to consider how to handle the change in the serving EAS to maintain establishment of the optimal transmission path.

Based on the above, in the related art, an AF needs to deploy an application to establish the optimal transmission path. In this case, the AF needs to provide a corresponding DNAI, i.e., the AF reports the DNAI to the 5th generation core network (5GC) automatically.

However, the DNAI is 5GC information, and in real networks, all DNAIs are created by a network operator/vendor/provider and transmitted to the AF/AS based on an offline configuration. Thus, in many cases, since the AF cannot understand the DNAI information, the AF may not provide the DNAI information (i.e., no network information is provided, or only AF identifier (ID) is provided), which leads to no appropriate DNAI being configured for an NEF. Or the NEF is not able to update the DNAI information flexibly when the information of the AF changes (e.g. a network address of the AS/AF or a location of the AS/AF changes).

It is noted from the above description that, in the related art, since the 5GC does not expose network information to the AF according to requirements of the AF, the AF is not able to perform a network configuration efficiently, such as providing an optimal DNAI in a request to perform the network configuration.

In addition, since the network information contains trade secrets of the network operator/vendor/provider, the 5GC is not able to expose all the network information to the AF.

In the embodiments of the present disclosure, a function of the core network (referred to as a first function in the subsequent description) determines network information based on relevant information of an AF or an EAS (referred to as a second function in the subsequent description) and exposes the network information. Since the exposed network information is determined based on the relevant information of the AF or the EAS, the first function may determine the network information that is required by the AF or the EAS and that may be exposed by the network operator/vendor/provider to the AF or the EAS based on the relevant information of the AF or the EAS. In this way, the AF or the EAS may be assisted in performing the network configuration based on the network information to construct an optimal end-to-end network, and further leakage of network information that cannot be exposed by the network operator/vendor/provider may be avoided.

A method for exposing network information, applied to a first function, is provided in an embodiment of the present disclosure. As shown in FIG. 2, the method includes the following steps.

At step 201, first information is received, network information is determined based on the first information, in which the first information includes relevant information of a second function, in which the second function includes an application function (AF) or an edge application server (EAS).

At step 202, the network information is exposed.

The relevant information of the second function refers to information that is configured for determining the network information that is required by the second function and that may be exposed to the second function. The network information that may be exposed to the second function refers to network information that may be exposed by the network operator/vendor/provider to the second function.

In an embodiment, the relevant information of the second function may include at least one of: address information; location information; application information; corresponding user information; or network related information.

In an embodiment, the network related information may include at least one of: a data network name (DNN); or single-network slice selection assistance information (S-NSSAI).

In actual applications, the AF is considered from the perspective of the core network, but from the perspective of an application, the AF may be referred to as an AS. Accordingly, the address information of the second function may include address information of the AS or the EAS, such as an internet protocol (IP) address of the EAS, an IP address range, an IP domain (which is intranet information assigned by the network (which may be interpreted as address segment information) or information that serves as an identifier of a private network), fully qualified domain name (FQDN) information, etc.

In an embodiment, the address information of the second function includes at least one of: IP address information (which may include public network IP address information, or private network IP address information, or both public network address information and private network IP address information); IP address segment (i.e., IP address range); IP domain information; or FQDN information.

In actual applications, the location information of the second function may include location information of the AS or the EAS, such as longitude and latitude where the EAS is located, the block where the EAS is located (e.g., the city, the county, the tracking area, etc., where the EAS is located), etc. The location information of the second function may be set according to requirements of the second function, which is not limited in the embodiments of the present disclosure.

In actual applications, the application information of the second function may include application information of the AS or the EAS, such as a provider/owner of the EAS, a type of application service, an application identifier (e.g., identity document (ID)), and other information.

In an embodiment, the application information of the second function includes at least one of: provider/owner information of the second function; an application category carried in the second function (i.e., the type of application service, which may also be referred to as application type); or an application identifier.

In actual applications, the application category carried in the second function may be classified into, for example video, high-definition interaction, vehicle network, cloud game, etc., based on the category of business, which is not limited in the embodiments of the present disclosure.

In actual applications, the corresponding user information of the second function may include a generic public subscription identifier (GPSI), a terminal identifier (also referred to as user identifier, such as UE ID), etc. The corresponding user information of the second function may be set based on requirements of the second function, which is not limited in the embodiments of the present disclosure.

In actual applications, the first function may include one or more core network functions such as a network exposure function (NEF), a session management function (SMF), a policy control function (PCF), etc. The first function may be set based on requirements (e.g., network deployment), which is not limited in the embodiments of the present disclosure, provided that the method for exposing network information in the embodiments of the present disclosure may be implemented.

If the first function includes an NEF and/or a PCF, the first function may receive the first information in a process that the second function requests to expose network information related to the second function. In other words, the first information may be configured for requesting to expose the network information related to the second function.

In an embodiment, if the first function includes an NEF and/or a PCF, receiving the first information may include: receiving the first information sent from the second function, in which the first information is configured for requesting to expose network information related to the second function.

It should be noted that in the embodiments of the present disclosure, the receiving and sending of information by the NEF and/or the PCF refers to that the NEF may communicate with other network functions directly or may communicate with other network functions through the PCF.

In actual applications, if the first function includes an SMF, the second function may send the first information to the NEF and/or the PCF in the process of requesting the NEF and/or PCF to expose the network information related to the second function. And then the NEF and/or the PCF sends the first information to the first function.

In an embodiment, if the first function includes an SMF, receiving the first information may include: receiving the first information sent from the NEF and/or the PCF.

In actual applications, at step 201, after the first function receives the first information sent from the second function or the NEF and/or the PCF, the network information may be determined based on at least the first information. In other words, the network information may be determined based on the first information and other information related to the network besides the first information.

In an embodiment, the network information includes at least one of: a data network access identifier (DNAI); an identifier corresponding to the DNAI; an external identifier corresponding to the DNAI; a user plane function (UPF) address; an identifier of the UPF (e.g. ID); an IP domain; network configuration information corresponding to a user; a correspondence between public network and private network IP address information (a correspondence between public network IP address information and private network IP address information); or a private network IP address.

The identifier corresponding to the DNAI refers to an identifier that is configured for identifying the DNAI in the network, or a correspondence between the DNAI and an AF identifier (i.e., a mapping table). Accordingly, the external identifier corresponding to the DNAI refers to not using an identifier in the network to identify the DNAI, but using an exposed identifier external to the network to identify the DNAI. For example, the external identifier may be an exposed ID that is configured for identifying the DNAI, or a correspondence between the DNAI and an AF external identifier (i.e., a mapping table).

In actual applications, the network configuration information corresponding to a user may include contents such as an IP index. The network configuration information corresponding to the user may be set based on the requirements of the second function, which is not limited in the embodiments of the present disclosure. In addition, the IP index may indicate whether an address allocation mode is a unified data management (UDM) static allocation, an SMF dynamic allocation, or a dynamic host configuration protocol (DHCP) dynamic allocation.

In actual applications, the other information related to the network besides the first information may at least include network topology information.

In an embodiment, determining the network information based on the first information includes: determining the network information based on the first information and the network topology information.

In actual applications, the network topology information may include information such as optional network information corresponding to the second function (e.g., DNAI (e.g., all DNAIs of at least one region corresponding to the second function)) and network topology (e.g., IP address segment, coverage area, transmission path, etc.) corresponding to the second function. The network topology information may be set based on the requirements of the second function, which is not limited in the embodiment of the present disclosure.

In actual applications, the network topology information may also be referred to as a network topology record. The name of the network topology information is not limited in the embodiments of the present disclosure, provided that the function thereof is implemented.

In an embodiment, the network topology information includes at least one of: a DNAI; an identifier corresponding to the DNAI; an external identifier corresponding to the DNAI; a UPF address; an identifier of the UPF; an IP domain; network configuration information corresponding to a user; a correspondence between public network and private network IP address information (a correspondence between public network IP address information and private network IP address information); or a private network IP address.

In actual applications, different types of network information may be determined based on different contents contained in the first information and the network topology information. For example, network information of a network with an optimal transmission path, e.g., a DNAI or a set of DNAIs, may be determined based on the network topology information. Network information of a network with the closest physical location, e.g., a DNAI or a set of DNAIs, may be determined based on the location information of the second function. Network information of a network with an optimal application strategy, e.g., a DNAI, may be determined based on the application information of the second function. The specific type of the network information and the specific method for determining the network information may be set based on the requirements of the second function, which are not limited in the embodiments of the present disclosure.

It should be noted that since in actual network, proximity of the location information does not necessarily imply proximity of the topology, and the closest DNAI at the closest location may actually experience a routing loop. Thus, based on the address information of the second function, the location information of the second function, the application information of the second function, the corresponding user information of the second function, and the network related information of the second function, in combination with the network topology information, optimal network information of the second function may be determined, for example, which is not merely limited to business continuity, but the second function may be more effectively assisted in performing an optimal DNAI configuration, such as configuring an optimal transmission path, and thus the second function may be assisted in implementing an optimal user-plane path for present and future protocol data unit (PDU) sessions.

In actual applications, if the first function includes an SMF, the network topology information may be understood as information known to the first function, i.e. the SMF has the function of generating the network topology information.

In actual applications, if the first function includes an NEF and/or a PCF, the first function needs to obtain the network topology information before determining the network information, and then determines the network information based on the first information and the network topology information.

In an embodiment, if the first function includes an NEF and/or a PCF, the method may further include: obtaining the network topology information.

In actual applications, the NEF and/or the PCF may obtain the network topology information from the SMF. In other words, the NEF may obtain the network topology information directly from the SMF, or the NEF may obtain the network topology information from the SMF through the PCF.

In an embodiment, obtaining the network topology information may include: sending second information to a session management function (SMF), in which the second information is configured for requesting the network topology information, and the second information includes at least one of: address information of the second function; location information of the second function; application information of the second function; corresponding user information of the second function; or network related information of the second function; and receiving the network topology information sent from the SMF.

It should be noted that the specific contents of the address information of the second function, the location information of the second function, the application information of the second function, the corresponding user information of the second function, and the network related information of the second function have been described in detail above, which will not be repeated herein.

In an embodiment, obtaining the network topology information may include: configuring the network topology information to the NEF/a unified data repository (UDR) by an operation administration and maintenance (OAM), in which the network topology information indicates mapping information between an EAS IP address/an IP address range and a DNAI. The network topology information includes at least one of: a DNAI; an identifier corresponding to the DNAI; an external identifier corresponding to the DNAI; a UPF address; an identifier of the UPF; an IP domain; network configuration information corresponding to a user; a correspondence between public network IP address information and private network IP address information; or a private network IP address.

In actual applications, the NEF may send the second information to the SMF through the PCF and receive the network topology information sent by the SMF through the PCF.

In actual applications, the NEF and/or the PCF may also subscribe to the network topology information from the SMF.

In an embodiment, obtaining the network topology information includes: sending sixth information to an SMF, in which the sixth information is configured for subscribing to the network topology information, in which the sixth information includes at least one of: address information of the second function; location information of the second function; application information of the second function; corresponding user information of the second function; or network related information of the second function; and receiving the network topology information sent from the SMF.

It should be noted that the specific contents of the address information of the second function, the location information of the second function, the application information of the second function, the corresponding user information of the second function, and the network related information of the second function have been described in detail above, which will not be repeated herein.

In an embodiment, obtaining the network topology information includes: sending sixth information to an OAM, in which the sixth information is configured for subscribing to the network topology information; receiving the network topology information sent from the OAM.

In actual applications, the NEF may send the sixth information to the SMF through the PCF and receive the network topology information sent by the SMF through the PCF.

In actual applications, the NEF and/or the PCF may also obtain the network topology information from the UDR.

In an embodiment, obtaining the network topology information includes: sending fourth information to a UDR, in which the fourth information is configured for requesting or subscribing to the network topology information, in which the fourth information including at least one of: address information of the second function; location information of the second function; application information of the second function; corresponding user information of the second function; or network related information of the second function; and receiving the network topology information sent from the UDR.

It should be noted that the specific contents of the address information of the second function, the location information of the second function, the application information of the second function, the corresponding user information of the second function, and the network related information of the second function have been described in detail above, which will not be repeated herein.

In actual applications, exposing the network information at step 202 may be understood as that the second function may obtain the network information from the first function. In particular, if the first function includes an NEF and/or a PCF, the second function may obtain the network information directly from the first function. In other words, the first function may send the network information to the second function directly after determining the network information.

In an embodiment, a specific implementation of the step 202 may include: sending the network information to the second function.

In actual applications, if the first function includes an SMF, the second function may obtain the network information from the first function through the NEF and/or the PCF. In other words, the first function may send the network information to the NEF and/or the PCF after determining the network information, and the NEF and/or the PCF sends the network information to the second function.

In an embodiment, a specific implementation of the step 202 may include: sending the network information to the second function through the NEF and/or the PCF.

In particular, the first function sends the network information to the NEF and/or PCF. And the NEF and/or PCF may send the network information to the second function after receiving the network information,

In an embodiment, the method may further include: receiving a subscription to cause the second function to obtain updated network information.

In actual applications, if the first function includes an NEF and/or a PCF, the second function may send the subscription directly to the NEF and/or the PCF to obtain the updated network information. In other words, if the updated network information exists, the NEF and/or the PCF may send the updated network information directly to the second function. If the first function includes an SMF, the second function may send the subscription to the NEF and/or PCF, and the NEF and/or PCF transmits the subscription to the SMF. And if the updated network information exists, the SMF may send the updated network information to the NEF and/or the PCF, and the NEF and/or PCF transmits the updated network information to the second function.

It should be noted that sending the subscription refers to sending a subscription message, and accordingly, receiving the subscription refers to receiving the subscription message. The subscription message may also be referred to as a subscription request, subscription information, etc. And the name of the subscription message is not limited in the embodiments of the present disclosure, provided that the function thereof is implemented.

In an embodiment of the present disclosure, for the subscription to the network information or the subscription to the network topology information, the subscribed information may be a change or an update of the network information or the network topology information.

In actual applications, the first function may synchronize the network information to the UDR for storage after determining the network information.

In an embodiment, the method may further include: storing the network information to a UDR; and/or, storing a correspondence between the relevant information (i.e., first information) of the second function and the network information to a UDR.

If the first function includes an NEF and/or a PCF, the first function may send directly the network information and/or send the correspondence between the relevant information of the second function and the network information to the UDR. If the first function includes an SMF, the first function may store the network information and/or the correspondence between the relevant information of the second function and the network information to the UDR through the NEF and/or the PCF. In other words, the first function may send the network information and/or the correspondence between the relevant information of the second function and the network information to the NEF and/or the PCF, and the NEF and/or the PCF stores the network information and/or the correspondence between the relevant information of the second function and the network information to the UDR.

In actual applications, in the case where the first function sends the network information to the UDR, the first function may also send the first information to the UDR. In particular, the first function may send the correspondence between the relevant information of the second function and the network information to the UDR. Accordingly, the UDR may store the correspondence between the relevant information of the second function and the network information.

In actual applications, the second function may have a requirement of updating or deleting the network information after storing the network information to the UDR.

In an embodiment, if the first function includes an NEF and/or a PCF, the method may further include: receiving third information sent from the second function, in which the third information is configured for requesting to update or delete the network information; sending the third information to a UDR; receiving a response returned from the UDR; and returning the response to the second function.

In actual applications, if the configuration of the second function is updated, the second function may send the third information that is configured for requesting to update the network information to the first function. For example, if the IP address of the second function is updated, the second function may send the third information to the first function, in which the third information may include an original IP address, a new IP address, and the network information. In addition, it may be understood that if the third information is configured for requesting to update the network information, the response returned by the first function to the second function may include a result of updating the network information, i.e., the response may indicate whether or not the network information has been successfully updated.

In actual applications, the second function may send the third information that is configured for deleting the network information to the first function based on the requirements of the second function. For example, if the IP address of the second function is updated, the second function may also send the third information that is configured for deleting the network information to the first function, in which the third information may include an original IP address and the network information. Accordingly, the response returned by the first function to the second function may include a result of deleting the network information, i.e. the response may indicate whether or not the network information has been successfully deleted.

In actual applications, after the second function receives the response returned by the first function, in which the response indicates that the network information has been successfully deleted, the second function may re-send the first information to the first function, i.e., sending new first information to the first function. And the first function may expose new network information to the second function based on the new first information.

In actual applications, if the UDR stores the correspondence between the relevant information of the second function and the network information, it may be understood that the third information may be configured for requesting to update or delete the correspondence between the relevant information of the second function and the network information.

In actual applications, the second function may request to retrieve or query the network information after the network information and/or the correspondence between the relevant information of the second function and the network information is stored in the UDR.

In an embodiment, if the first function includes an NEF and/or a PCF, the method may further include: receiving fifth information sent from the second function, in which the fifth information is configured for requesting to retrieve or query the network information; sending the fifth information to a UDR; receiving a response returned from the UDR; and returning the response to the second function.

In actual applications, the specific scenario in which the second function sends the fifth information that is configured for requesting to retrieve or query the network information to the first function may be set based on the requirements of the second function, which is not limited in the embodiments of the present disclosure.

In actual applications, the response returned by the first function to the second function may include a result of retrieving or querying the network information.

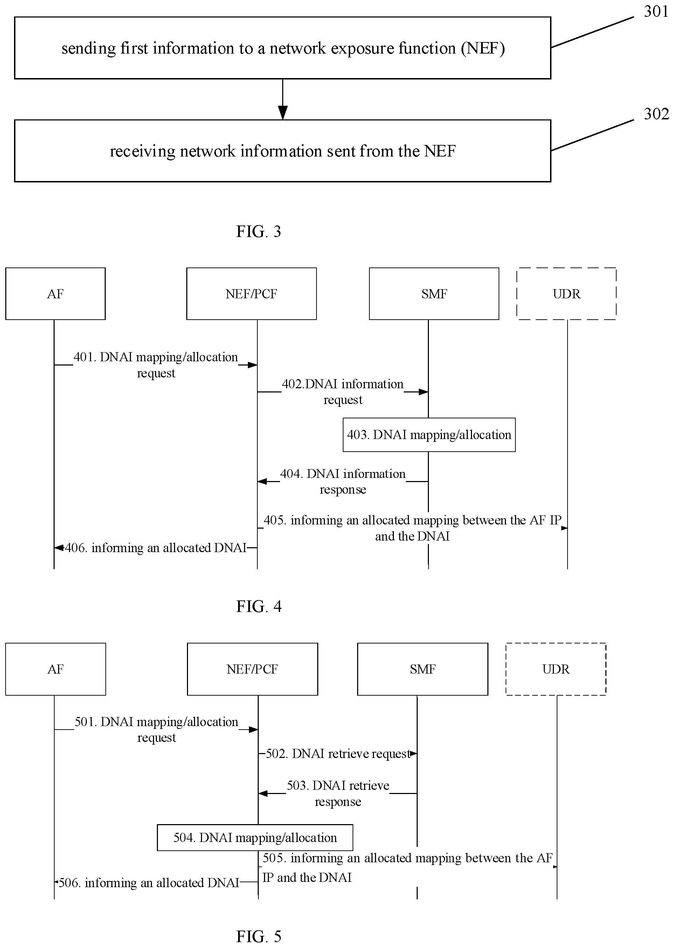

A method for exposing network information, applied to a second function, is provided in an embodiment of the present disclosure. As shown in FIG. 3, the method includes the following steps.

At step 301, first information is sent to an NEF, in which the first information includes relevant information of the second function, in which the second function includes an application function (AF) or an edge application server (EAS); and the first information is configured for requesting to expose network information related to the second function.

At step 302, network information sent from the NEF is received.

In an embodiment, the method may further include: sending a subscription to an NEF to obtain updated network information.

In an embodiment, the method may further include: sending third information to an NEF, in which the third information is configured for requesting to update or delete the network information; and receiving a response returned from the NEF.

In an embodiment, the method may further include: sending fifth information to an NEF, in which the fifth information is configured for requesting to retrieve or query the network information; and receiving a response returned from the NEF.

It should be noted that the specific processing of the second function has been described in detail above, which will not be repeated herein.

With the method for exposing network information provided in the embodiment of the present disclosure, the first function receives the first information, determines the network information based on the first information, and exposes the network information. The first information includes the relevant information of the second function, in which the second function includes the AF or the EAS. In the technical solution provided in the embodiment of the present disclosure, since the exposed network information is determined based on relevant information of the AF or the EAS, network information that is required by the AF or the EAS and that may be exposed by a network operator/vendor/provider to the AF or the EAS may be determined based on the relevant information of the AF or the EAS. In this way, the AF or the EAS is assisted in performing a network configuration based on the network information to construct an optimal end-to-end network, further leakage of network information that cannot be exposed by the network operator/vendor/provider may be avoided.

The present disclosure is described in further detail below in connection with application embodiments.

In an embodiment of the present application, in order to solve a mapping problem between the AF and DNAI in a case where no appropriate DNAI is configured for the NEF or the NEF is not able to update the DNAI information flexibly when the information of the AF changes due to the fact that the AF (or EAS) does not provide the DNAI information, a flexible mapping between the DNAI and the AF is performed on the network side based on the information provided by the AF (i.e., the aforementioned first information), so that the AF is assisted in performing a UE-insensitive user-plane reconfiguration.

It should be noted that the mapping between the DNAI and the AF refers to configuring the DNAI (i.e., the aforementioned network information) for the AF. Configuring the DNAI for the AF may also be understood as allocating or selecting the DNAI for the AF. In other words, the mapping, selection, configuration, and allocation of the DNAI refer to the same operation.

In an embodiment of the present application, an SMF (i.e., the first function) may perform the mapping between the DNAI and the AF.

In particular, as shown in FIG. 4, an SMF performing the mapping between the DNAI and the AF may include the following steps.

At step 401, an AF initiates a DNAI mapping/allocation (also understood as allocation, configuration or selection) request, and then step 402 is executed.

Here, the DNAI mapping/allocation request carries the aforementioned first information.

At step 402, after receiving the DNAI mapping/allocation request, the NEF/PCF initiates a DNAI information request to the SMF, and then step 403 is executed.

Here, the DNAI information request also carries the aforementioned first information.

At step 403, after receiving the DNAI information request, the SMF performs the DNAI mapping/allocation, and then step 404 is executed.

Here, the DNAI mapping/allocation refers to mapping (which may also be referred to as allocating, configuring or selecting) the DNAI (i.e., the aforementioned network information) for the AF.

At step 404, the SMF sends a DNAI information response to the NEF, and then step 405 or step 406 is executed.

At step 405, the NEF informs a UDR about an allocated mapping between the AF IP and the DNAI, and then step 406 is executed.

At step 406, the NEF informs the AF of an allocated DNAI.

In actual applications, in the step 401, the DNAI mapping/allocation request may be configured for requesting the DNAI mapping/allocation based on the AS, in which the DNAI mapping/allocation request may carry at least one of an IP address of the AF (which may be an IP address or an IP address range), a FQDN, location information of the AF (which may include latitude and longitude, block information, etc.), application information (which may include information such as an application ID, an application type (i.e., the aforementioned application category hosted by the AF), an application provider, etc.), and other information.

In the step 402, the DNAI information request may also be configured for requesting the DNAI mapping/allocation based on the AS, in which the DNAI information request may also carry at least one of the IP address of the AF, the FQDN, the location information of the AF, the application information, and other information. In addition, discovery of the SMF may be realized after sending a lookup request to a binding support function (BSF).

In the step 403, the SMF may determine a target DNAI (i.e., the aforementioned network information) in combination with relevant information of the AF (i.e., the aforementioned first information, which may include at least one of the IP address of the AF, the FQDN, the location information of the AF, the application information, and other information) and network topology information.

In the step 404, the SMF may send suggested DNAI information to the NEF through the DNAI information response.

In the step 405, the NEF may synchronize a mapping relationship between the AF IP and the DNAI to the UDR for storage.

In the step 406, the NEF may send the DNAI directly to the AF. Alternatively, the NEF may convert the DNAI information to DNAI external information (i.e., the aforementioned external identifier corresponding to the DNAI) and send the DNAI external information to the AF. The DNAI external information may be an identifier (e.g., an ID) capable of indicating the DNAI mapping/allocation that can be exposed.

In an embodiment of the present application, the NEF (i.e., the aforementioned first function) may perform the mapping between the DNAI and the AF. In other words, the NEF makes a DNAI decision after obtaining the network topology information from the SMF.

In particular, as shown in FIG. 5, an NEF performing the mapping between the DNAI and the AF may include the following steps.

At step 501, the AF initiates a DNAI mapping/allocation request, and then step 502 is executed.

Here, the DNAI mapping/allocation request carries the aforementioned first information.

At step 502, after receiving the DNAI mapping/allocation request, the NEF/PCF initiates a DNAI retrieve request to the SMF, and then step 503 is executed.

Here, the DNAI retrieve request carries the aforementioned second information.

At step 503, after receiving the DNAI retrieve request, the SMF performs a DNAI retrieval and sends a DNAI retrieve response to the NEF, and then step 504 is executed.

Here, the DNAI retrieve response carries the aforementioned network topology information.

At step 504, the NEF performs a DNAI mapping/allocation, and then step 505 or step 506 is executed.

At step 505, the NEF informs a UDR about an allocated mapping between the AF IP and the DNAI, and then step 506 is executed.

At step 506, the NEF informs the AF of an allocated DNAI.

In actual applications, in the step 501, the DNAI mapping/allocation request may carry at least one of an IP address of the AF, a FQDN, location information of the AF, application information and other information.

In the step 502, the DNAI retrieval request may carry the location information of the AF, etc.

In the step 503, the SMF may send a DNAI of a target area and corresponding network topology information (e.g., information such as IP address segment, coverage area, etc.) to the NEF in conjunction with the location information of the AF.

In the step 504, the NEF may decide a DNAI or a set of DNAIs by combining the received network topology information (e.g., information such as IP address segment, coverage area, etc.), and at least one of the IP address of the AF, the FQDN, the location information of the AF, the application information, etc.

In the step 505, the NEF may synchronize a mapping relationship between the AF IP and the DNAI to the UDR for storage.

In the step 506, the NEF may send a DNAI directly to the AF. Alternatively, the NEF may convert the DNAI information to DNAI external information and send the DNAI external information to the AF.

In an embodiment, the DNAI mapping/allocation based on the AS may be deleted or updated based on a request of the AF. In other words, the mapping relationship between the AF IP and the DNAI may be deleted or updated based on a requirement of the AF.

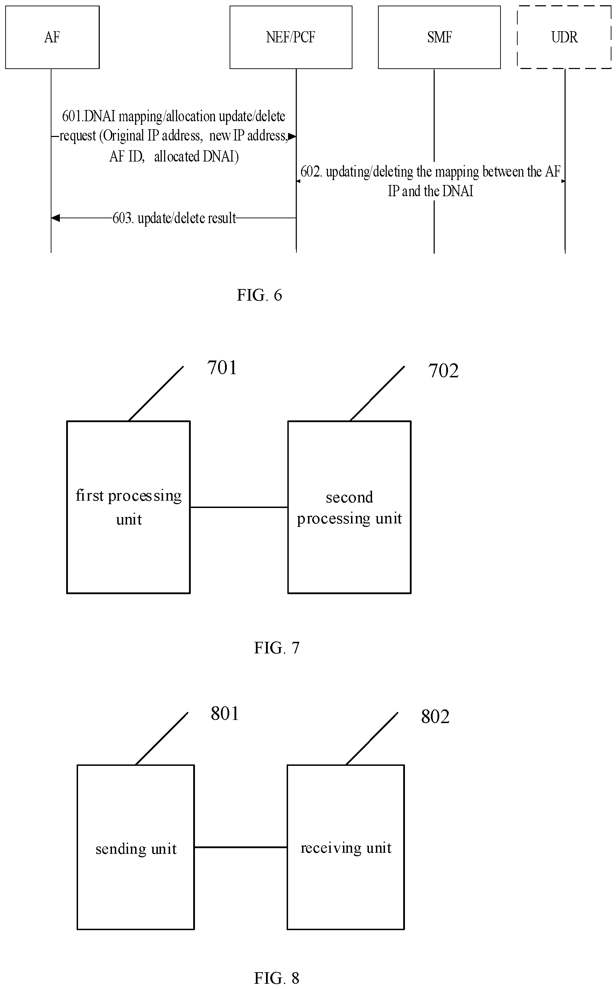

In particular, as shown in FIG. 6, deleting/updating the DNAI mapping/allocation may include the following steps.

At step 601, an AF initiates a DNAI mapping/allocation update/delete request, and then step 602 is executed.

Here, the DNAI mapping/allocation update/delete request carries the aforementioned third information.

At step 602, after receiving the DNAI mapping/allocation update/delete request, an NEF/PCF updates/deletes the mapping between the AF IP and the DNAI by interacting with a UDR, and then step 603 is executed.

At step 603, the NEF/PCF returns an update/delete result (i.e., the aforementioned response returned by the first function to the AF) to the AF.

In actual applications, in the step 601, if an IP address is updated, the update request may carry an original IP address, a new IP address and an allocated DNAI of the AF. The delete request may carry the original IP address and the allocated DNAI.

In the step 602, after receiving the DNAI mapping/allocation update/delete request, the NEF/PCF may send the DNAI mapping/allocation update/delete request to the UDR. The UDR performs updating/deleting of corresponding storage content and returns the update/delete result (i.e., the aforementioned response returned by the UDR to the first function) to the NEF/PCF.

With the technical solution provided in the embodiment of the present disclosure, firstly, a "DNAI mapping/allocation based on the AS" service may be exposed through the NEF/PCF, to implement an ability of the 5GC to perform optimal DNAI configuration in combination with the AF related information and the network topology information; secondly, the SMF may provide a "DNAI mapping/allocation" service to provide a suggestion of the optimal DNAI configuration; thirdly, the SMF may provide a "DNAI information query" service to provide the network topology information related to the DNAI.

In summary, in the embodiment of the present application, the network side may perform a flexible mapping between the DNAI and the AF based on the information provided by the AF, and provide the DNAI information which may ensure the optimal transmission path to the AF. The DNAI information may be configured for establishing a subsequent PDU session, so that the AF may be assisted in performing a UE-insensitive user-plane reconfiguration. Or, in a business continuity assurance, the DNAI information may guarantee establishment of the optimal transmission path to guarantee the business service quality.

To implement the method on the first function side in the embodiments of the present disclosure, an apparatus for exposing network information, configured in the first function, is also provided in the embodiments of the present disclosure. As shown in FIG. 7, the apparatus includes a first processing unit 701 and a second processing unit 702.

The first processing unit 701 is configured to receive first information, and determine network information based on the first information, in which the first information includes relevant information of a second function, in which the second function includes an AF or an EAS.

The second processing unit 702 is configured to expose the network information.

In an embodiment, the second processing unit 702 is further configured to receive a subscription to cause the second function to obtain updated network information.

In an embodiment, the first processing unit 701 is specifically configured to determine the network information based on the first information and network topology information.

In an embodiment, the first function includes an NEF and/or a PCF, and the first processing unit 701 is further configured to obtain the network topology information.

In an embodiment, the first processing unit 701 is further configured to: send second information to an SMF, in which the second information is configured for requesting the network topology information, and the second information includes at least one of: address information of the second function; location information of the second function; application information of the second function; corresponding user information of the second function; or network related information of the second function; and receive the network topology information sent from the SMF.

In an embodiment, the first processing unit 701 is further configured to: send sixth information to an SMF, in which the sixth information is configured for subscribing to the network topology information, in which the sixth information includes at least one of: address information of the second function; location information of the second function; application information of the second function; corresponding user information of the second function; or network related information of the second function; and receive the network topology information sent from the SMF.

In an embodiment, the first processing unit 701 is further configured to: send fourth information to a UDR, in which the fourth information is configured for requesting or subscribing to the network topology information, in which the fourth information including at least one of: address information of the second function; location information of the second function; application information of the second function; corresponding user information of the second function; or network related information of the second function; and receive the network topology information sent from the UDR.

In an embodiment, the first processing unit 701 is further configured to receive the first information sent from the second function, in which the first information is configured for requesting to expose network information related to the second function.

In an embodiment, the apparatus further includes a third processing unit, configured to: receive third information sent from the second function, in which the third information is configured for requesting to update or delete the network information; send the third information to a UDR; receive a response returned from the UDR; and return the response to the second function.

In an embodiment, the third processing unit is further configured to: receive fifth information sent from the second function, in which the fifth information is configured to request retrieving or querying the network information; send the fifth information to the UDR; receive a response returned from the UDR; and return the response to the second function.

In an embodiment, the first function includes an SMF, and the first processing unit 701 is further configured to receive the first information sent from an NEF and/or a PCF.

In an embodiment, the third processing unit is further configured to store the network information to a UDR; and/or, store a correspondence between the relevant information of the second function and the network information to a UDR.

In actual applications, the first processing unit 701, the second processing unit 702 and the third processing unit may be implemented by a processor combined with a communication interface in the apparatus for exposing network information.

To implement the method on the second function side in the embodiments of the present disclosure, an apparatus for exposing network information, configured in the second function, is also provided in the embodiments of the present disclosure. As shown in FIG. 8, the apparatus includes a sending unit 801 and a receiving unit 802.

The sending unit 801 is configured to send first information to an NEF, in which the first information includes relevant information of the second function, in which the second function includes an AF or an EAS; and in which the first information is configured for requesting to expose network information related to the second function.

The receiving unit 802 is configured to receive network information sent from the NEF.

In an embodiment, the sending unit 801 is further configured to send a subscription to an NEF to obtain updated network information.

In an embodiment, the sending unit 801 is further configured to send third information to an NEF, in which the third information is configured for requesting to update or delete the network information.

The receiving unit 802 is further configured to receive a response returned from the NEF.

In an embodiment, the sending unit 801 is further configured to send fifth information to an NEF, in which the fifth information is configured for requesting to retrieve or query the network information.

The receiving unit 802 is further configured to receive a response returned from the NEF.

In actual applications, the sending unit 801 and the receiving unit 802 may be implemented by a communication interface in the apparatus for exposing network information.

It should be noted that when the apparatus for exposing network information provided in the above embodiments exposes network information, the division of the above-mentioned functional modules is used as an example for only illustration. In actual applications, the above-mentioned function may be realized by different program modules according to actual needs. That is, the content structure of the device is divided into different program modules to complete all or part of the function described above. In addition, the apparatus for exposing network information provided in the embodiments belongs to the same concept as the method for exposing network information, and the specific implementation thereof may be referred to the method embodiments, which will not be repeated herein.

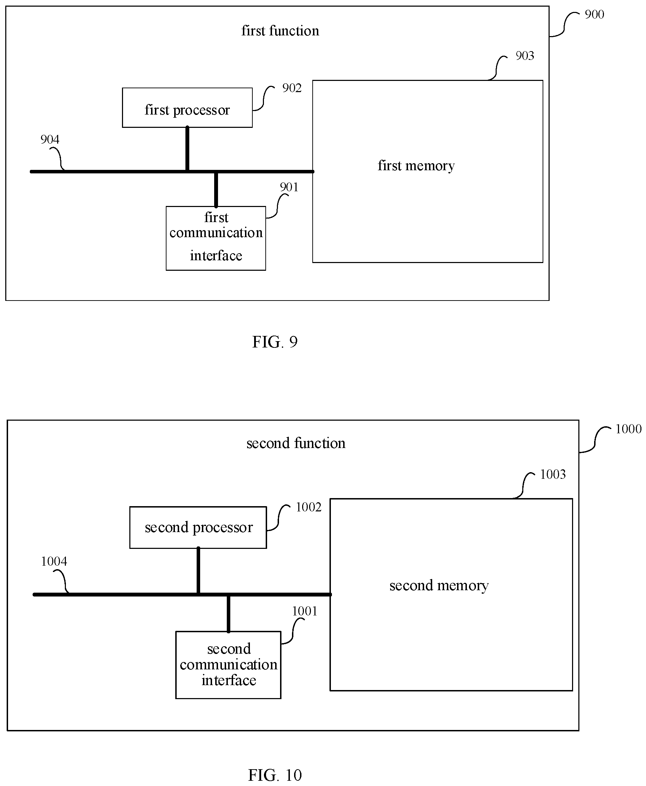

Based on the hardware implementation of the program module described above, and in order to implement the method on the first function side in the embodiments of the present disclosure, the first function is also provided in the embodiments of the present disclosure. As shown in FIG. 9, the first function 900 includes a first communication interface 901 and a first processor 902.

The first communication interface 901 is capable of performing information interaction with a second function and/or other core network functions.

The first processor 902 is connected with the first communication interface 901 to implement the information interaction with the second function and/or other core network functions, which is configured to implement the method provided by one or more technical solutions on the first function side when running a computer program. And the computer program is stored on a first memory 903.

In particular, the first processor 902 is configured to: receive first information through the first communication interface 901, and determine network information based on the first information, in which the first information includes relevant information of the second function, and the second function includes an AF or an EAS; and expose the network information through the first communication interface 901.

In an embodiment, the first processor 902 is further configured to receive a subscription through the first communication interface 901 to cause the second function to obtain updated network information.

In an embodiment, the first processor 902 is specifically configured to determine the network information based on the first information and network topology information.

In an embodiment, the first function 900 includes an NEF and/or a PCF, and the first processor 902 is further configured to obtain the network topology information through the first communication interface 901.

In an embodiment, the first processor 902 is further configured to: send second information to an SMF through the first communication interface 901, in which the second information is configured for requesting the network topology information, and the second information includes at least one of: address information of the second function; location information of the second function; application information of the second function; corresponding user information of the second function; or network related information of the second function; and receive the network topology information sent from the SMF through the first communication interface 901.

In an embodiment, the first processor 902 is further configured to: send sixth information to an SMF through the first communication interface 901, in which the sixth information is configured for subscribing to the network topology information, in which the sixth information includes at least one of: address information of the second function; location information of the second function; application information of the second function; corresponding user information of the second function; or network related information of the second function; and receive the network topology information sent from the SMF through the first communication interface 901.

In an embodiment, the first processor 902 is further configured to: send fourth information to a UDR through the first communication interface 901, in which the fourth information is configured for requesting or subscribing to the network topology information, in which the fourth information including at least one of: address information of the second function; location information of the second function; application information of the second function; corresponding user information of the second function; or network related information of the second function; and receive the network topology information sent from the UDR through the first communication interface 901.

In an embodiment, the first processor 902 is further configured to receive the first information sent from the second function through the first communication interface 901, in which the first information is configured for requesting to expose network information related to the second function.

In an embodiment, the first processor 902 is further configured to: receive third information sent from the second function through the first communication interface 901, in which the third information is configured for requesting to update or delete the network information; send the third information to a UDR through the first communication interface 901; receive a response returned from the UDR through the first communication interface 901; and return the response to the second function through the first communication interface 901.

In an embodiment, the first processor 902 is further configured to: receive fifth information sent from the second function through the first communication interface 901, in which the fifth information is configured for requesting to retrieve or query the network information; send the fifth information to a UDR through the first communication interface 901; receive a response returned from the UDR through the first communication interface 901; and return the response to the second function through the first communication interface 901.

In an embodiment, the first function 900 includes an SMF, and the first processor 902 is further configured to receive the first information sent from an NEF and/or a PCF through the first communication interface 901.

In an embodiment, the first processor 902 is further configured to store the network information to a UDR through the first communication interface 901; and/or, store a correspondence between the relevant information of the second function and the network information to a UDR through the first communication interface 901.

It should be noted that the specific processing of the first processor 902 and the first communication interface 901 may be understood with reference to the method described above.

In actual applications, components in the first function 900 are coupled together via a bus system 904. It may be understood that the bus system 904 is configured to implement connected communication between the components. The bus system 904 includes a power bus, a control bus, and a status signal bus in addition to a data bus. However, for clarity of description, the various buses are labeled as the bus system 904 in FIG. 9.

In embodiments of the disclosure, the first memory 903 is configured to store various types of data to support operations of the first function 900. Examples of such data include any computer program configured to operate on the first function 900.

The method disclosed in embodiments of the disclosure may be applied to the first processor 902 or implemented by the first processor 902. The first processor 902 may be an integrated circuit chip with a signal processing capability. In an implementation, each step of the above method may be completed by an integrated logic circuit of hardware or instructions in the form of software in the first processor 902. The first processor 902 above may be a general processor, a digital signal processor (DSP), or other programmable logic devices, discrete gate or transistor logic devices, discrete hardware components, and the like. The first processor 902 may implement or execute the methods, steps and logic blocks disclosed in embodiments of the disclosure. The general processor may be a microprocessor or any conventional processor, etc. The steps of the method disclosed in embodiments of the disclosure may be executed and completed by a hardware decoding processor which is embodied directly or by a combination of hardware and software modules in the decoding processor. The software module may be located in a storage medium. The storage medium is located in the first memory 903. The first processor 902 reads the information in the first memory 903, and completes the steps of the above method in combination with the hardware.

In an embodiment, the first function 900 may be implemented by one or more application specific integrated circuits (ASICs), DSPs, programmable logic devices (PLDs), complex programmable logic devices (CPLDs), field-programmable gate arrays (FPGAs), general-purpose processors, controllers, micro controller units (MCUs), microprocessors, or other electronic component, for executing the above method.

Based on the implementation of the hardware of the program module, and in order to implement the method on the second function side in the embodiments of the present disclosure, the second function is also provided in the embodiment of the present disclosure. As shown in FIG. 10, the second function 1000 includes a second communication interface 1001 and a second processor 1002.

The second communication interface 1001 is capable of performing information interaction with an NEF.

The second processor 1002 is connected with the second communication interface 1001 to implement the information interaction with the NEF, which is configured to implement the method provided by one or more technical solutions on the second function side when running a computer program. And the computer program is stored on a second memory 1003.

In particular, the second communication interface 1001 is configured to: send first information to the NEF, in which the first information includes relevant information of the second function 1000, in which the second function 1000 includes an AF or an EAS; and in which the first information is configured for requesting to expose network information related to the second function 1000; and receive network information sent from the NEF.

In an embodiment, the second communication interface 1001 is further configured to: send a subscription to the NEF to obtain updated network information.

In an embodiment, the second communication interface 1001 is further configured to: send third information to the NEF, in which the third information is configured for requesting to update or delete the network information; and receive a response returned from the NEF.

In an embodiment, the second communication interface 1001, is further configured to: send fifth information to the NEF, in which the fifth information is configured for requesting to retrieve or query the network information; and receive a response returned from the NEF.

It should be noted that the specific processing of the second communication interface 1001 may be understood with reference to the method described above.

In actual applications, components in the second function 1000 are coupled together through a bus system 1004. It may be understood that the bus system 1004 is configured to implement connected communication between the components. The bus system 1004 includes a power bus, a control bus, and a status signal bus in addition to a data bus. However, for clarity of description, the various buses are labeled as the bus system 1004 in FIG. 10.

The second memory 1003 in the embodiment of the present disclosure is configured to store various types of data to support operations of the second function 1000. The data includes: any computer program for operations on the second function 1000.

The method disclosed in embodiments of the disclosure may be applied to the second processor 1002 or implemented by the second processor 1002. The second processor 1002 may be an integrated circuit chip with a signal processing capability. In an implementation, each step of the above method may be completed by an integrated logic circuit of hardware or instructions in the form of software in the second processor 1002. The second processor 1002 above may be a general processor, a digital signal processor (DSP), or other programmable logic devices, discrete gate or transistor logic devices, discrete hardware components, and the like. The second processor 1002 may implement or execute the methods, steps and logic blocks disclosed in embodiments of the disclosure. The general processor may be a microprocessor or any conventional processor, etc. The steps of the method disclosed in embodiments of the disclosure may be executed and completed by a hardware decoding processor which is embodied directly or by a combination of hardware and software modules in the decoding processor. The software module may be located in a storage medium. The storage medium is located in the second memory 1002. The second processor 1002 reads the information in the second memory 1002, and completes the steps of the above method in combination with the hardware.

In an exemplary embodiment, the second function 1000 may be implemented by one or more ASICs, DSPs, PLDs, CPLDs, FPGAs, general-purpose processors, controllers, MCUs, microprocessors, or other electronic components, for executing the above method.

It may be understood that, the memories (the first memory 903, the second memory 1003) of the embodiments of the present disclosure may be volatile or nonvolatile memories, or may include both the volatile and nonvolatile memories. The nonvolatile memory may be a read only memory (ROM), a programmable read only memory (PROM), an erasable programmable read only memory (EPROM), an electrically erasable programmable read-only memory (EEPROM), a ferromagnetic random access memory (FRAM), a flash memory, a magnetic surface memory, an optical disk, or a compact disc read-only memory (CD-ROM). The magnetic surface memory may be a magnetic disk memory or a magnetic tape memory. The volatile memory may be a random access memory (RAM), which is used as an external cache. By way of illustration, but not limitation, multiple forms of RAMs are available, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a syncLink dynamic random access memory (SLDRAM), and a direct rambus random access memory (DRRAM). The memories described in embodiments of the disclosure are intended to include, but not limited to, these and any other suitable types of memories.

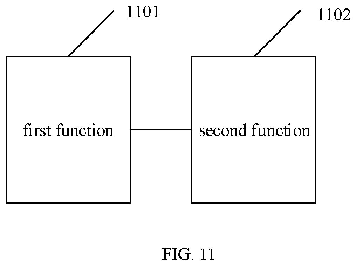

To implement the method provided in the embodiments of the present disclosure, a system for exposing network information is also provided in the embodiments of the present disclosure. As shown in FIG. 11, the system includes a first function 1101 and a second function 1102.

It should be noted that the specific processing of the first function 1101 and the second function 1102 have been described in detail above and will not be repeated herein.

In an embodiment, embodiments of the disclosure also provide a storage medium, that is, a computer storage medium, specifically a computer-readable storage medium. For example, the storage medium includes a first memory 903 storing a computer program, in which the computer program may be executed by the first processor 902 of the first function 900 to implement the steps of the method on the first function side. For example, the storage medium includes a second memory 1003 storing a computer program, in which the computer program may be executed by the second processor 1002 of the second function 1000 to implement the steps of the method on the second function side. The computer-readable storage medium may be a memory such as the FRAM, the ROM, the PROM, the EPROM, the EEPROM, the flash memory, the magnetic surface memory, the optical disk, the CD-ROM or the like.

It should be noted that, the term "first" and " second" are used to distinguish similar objects, and are not necessarily used to describe a specific order or sequence.

In addition, the technical solutions described in embodiments of the disclosure may be arbitrarily combined without conflict.

The above is only a preferable embodiment of the disclosure, and is not used to limit the protection scope of the disclosure.

## Claims

1. A method for exposing network information, applied to a first function, comprising:
receiving first information, and determining network information based on the first information, wherein the first information comprises relevant information of a second function, wherein the second function comprises an application function (AF) or an edge application server (EAS); and
exposing the network information.

2. The method according to claim 1, wherein the relevant information of the second function comprises at least one of:
address information;
location information;
application information;
corresponding user information; or
network related information.

3. The method according to claim 2, wherein the network related information comprises at least one of:
a data network name (DNN); or
single-network slice selection assistance information (S-NSSAI).

4. The method according to claim 2, wherein the application information of the second function comprises at least one of:
provider/owner information of the second function;
an application category carried in the second function; or
an application identifier.

5. The method according to claim 2, wherein the address information of the second function comprises at least one of:
internet protocol (IP) address information;
an IP address segment;
IP domain information; or
fully-qualified domain name (FQDN) information.

6. The method according to claim 1, wherein the network information comprises at least one of:
a data network access identifier (DNAI);
an identifier corresponding to the DNAI;
an external identifier corresponding to the DNAI;
a user plane function (UPF) address;
an identifier of the UPF;
an IP domain;
network configuration information corresponding to a user;
a correspondence between public network IP address information and private network IP address information; or
a private network IP address.

7. The method according to claim 1, further comprising:
receiving a subscription to cause the second function to obtain updated network information.

8. The method according to any one of claims 1 to 7, wherein determining the network information based on the first information comprises:
determining the network information based on the first information and network topology information.

9. The method according to claim 8, wherein the first function comprises a network exposure function (NEF) and/or a policy control function (PCF), and the method further comprises:
obtaining the network topology information.

10. The method according to claim 9, wherein obtaining the network topology information comprises:
sending second information to a session management function (SMF), wherein the second information is configured for requesting the network topology information, and the second information comprises at least one of: address information of the second function; location information of the second function; application information of the second function; corresponding user information of the second function; or network related information of the second function; and
receiving the network topology information sent from the SMF.

11. The method according to claim 9, wherein obtaining the network topology information comprises:
configuring the network topology information to the NEF/a unified data repository (UDR) by an operation administration and maintenance (OAM), wherein the network topology information indicates mapping information between an EAS IP address/an IP address range and a DNAI.

12. The method according to claim 9, wherein obtaining the network topology information comprises:
sending sixth information to an SMF/OAM, wherein the sixth information is configured for subscribing to the network topology information, wherein the sixth information comprises at least one of: address information of the second function; location information of the second function; application information of the second function; corresponding user information of the second function; or network related information of the second function; and
receiving the network topology information sent from the SMF/OAM.

13. The method according to claim 9, wherein obtaining the network topology information comprises:
sending fourth information to a UDR, wherein the fourth information is configured for requesting or subscribing to the network topology information, wherein the fourth information comprises at least one of: address information of the second function; location information of the second function; application information of the second function; corresponding user information of the second function; or network related information of the second function; and
receiving the network topology information sent from the UDR.

14. The method according to claim 9, wherein receiving the first information comprises:
receiving the first information sent from the second function, wherein the first information is configured for requesting to expose the network information related to the second function.

15. The method according to claim 9, further comprising:
receiving third information sent from the second function, wherein the third information is configured for requesting to update or delete the network information;
sending the third information to a UDR;
receiving a response returned from the UDR; and
returning the response to the second function.

16. The method according to claim 9, further comprising:
receiving fifth information sent from the second function, wherein the fifth information is configured for requesting to retrieve or query the network information;
sending the fifth information to a UDR;
receiving a response returned from the UDR; and
returning the response to the second function.

17. The method according to claim 8, wherein the first function comprises an SMF, and receiving the first information comprises:
receiving the first information sent from an NEF and/or a PCF.

18. The method according to claim 8, wherein the network topology information comprises at least one of:
a DNAI;
an identifier corresponding to the DNAI;
an external identifier corresponding to the DNAI;
a UPF address;
an identifier of the UPF;
an IP domain;
network configuration information corresponding to a user;
a correspondence between public network IP address information and private network IP address information; or
a private network IP address.

19. The method according to any one of claims 1 to 7, further comprising:
storing the network information to a UDR;
and/or,
storing a correspondence between the relevant information of the second function and the network information to a UDR.

20. A method for exposing network information, applied to a second function, comprising:
sending first information to a network exposure function (NEF), wherein the first information comprises relevant information of the second function, wherein the second function comprises an application function (AF) or an edge application server (EAS); and wherein the first information is configured for requesting to expose network information related to the second function; and
receiving network information sent from the NEF.

21. The method according to claim 20, wherein the relevant information of the second function comprises at least one of:
address information;
location information;
application information;
corresponding user information; or
network related information.

22. The method according to claim 21, wherein the network related information comprises at least one of:
a data network name (DNN); or
single-network slice selection assistance information (S-NSSAI).

23. The method according to claim 21, wherein the application information of the second function comprises at least one of:
provider/owner information of the second function;
an application category carried in the second function; or
an application identifier.

24. The method according to claim 21, wherein the address information of the second function comprises at least one of:
internet protocol (IP) address information;
an IP address segment;
IP domain information; or
fully-qualified domain name (FQDN) information.

25. The method according to claim 21, wherein the network information comprises at least one of:
a data network access identifier (DNAI);
an identifier corresponding to the DNAI;
an external identifier corresponding to the DNAI;
a user plane function (UPF) address;
an identifier of the UPF;
an IP domain;
network configuration information corresponding to a user;
a correspondence between public network IP address information and private network IP address information; or
a private network IP address.

26. The method according to claim 20, further comprising:
sending a subscription to an NEF to obtain updated network information.

27. The method according to any one of claims 20 to 26, further comprising:
sending third information to an NEF, wherein the third information is configured for requesting to update or delete the network information; and
receiving a response returned from the NEF.

28. The method according to any one of claims 20 to 26, further comprising:
sending fifth information to an NEF, wherein the fifth information is configured for requesting to retrieve or query the network information; and
receiving a response returned from the NEF.

29. An apparatus for exposing network information, configured in a first function, comprising:
a first processing unit, configured to receive first information, and determine network information based on the first information, wherein the first information comprises relevant information of a second function, wherein the second function comprises an application function (AF) or an edge application server (EAS); and
a second processing unit, configured to expose the network information.

30. An apparatus for exposing network information, configured in a second function, comprising:
a sending unit, configured to send first information to a network exposure function (NEF), wherein the first information comprises relevant information of the second function, wherein the second function comprises an application function (AF) or an edge application server (EAS); and wherein the first information is configured for requesting to expose network information related to the second function; and
a receiving unit, configured to receive network information sent from the NEF.

31. A first function comprises: a first communication interface and a first processor; wherein
the first processor is configured to receive first information through the first communication interface, and determine network information based on the first information, wherein the first information comprises relevant information of a second function, wherein the second function comprises an application function (AF) or an edge application server (EAS); and
expose the network information through the first communication interface.

32. A second function comprises: a second communication interface and a second processor; wherein
the second communication interface is configured to send first information to a network exposure function (NEF), wherein the first information comprises relevant information of the second function, wherein the second function comprises an application function (AF) or an edge application server (EAS); and wherein the first information is configured for requesting to expose network information related to the second function; and
receive network information sent from the NEF.

33. A first function comprises: a first processor and a first memory that is configured to store a computer program executable by the processor, wherein
when the first processor is configured to execute the computer program, the method according to any one of claims 1 to 12 is implemented.

34. A second function comprises: a second processor and a second memory that is configured to store a computer program executable by the processor, wherein
when the second processor is configured to execute the computer program, the method according to any one of claims 20 to 28 is implemented.

35. A storage medium having stored a computer program that, when executed by a processor, implements the method according to any one of claims 1 to 19, or any one of claims 20 to 28.
